# DEMANDE DE BREVET EUROPEEN

(11) **EP 4 817 480 A1**
(43) Date de publication de la demande: **07.10.2026**
(21) Numéro de dépôt: 26163857.1
(22) Date de dépôt: 11.03.2026
(51) Int. Cl.: A47J 36/06, A47J 36/38

(54) **APPAREIL DE CUISSON ELECTRIQUE A BAIN DE CUISSON AVEC DISPOSITIF DE GUIDAGE DE FLUX**

(30) Priorité: 01.04.2025 FR 2503397
(71) Demandeur: SEB S.A., 69130 Ecully (FR)
(72) Inventeur: RENAUD, David, 69134 Ecully Cedex (FR); SEURAT, Frédéric, 69134 Ecully Cedex (FR)
(74) Mandataire: SEB Développement

(57) **Abrégé**

L'invention concerne un appareil de cuisson électrique à bain de cuisson configuré pour la cuisson d'aliment et comportant un boîtier (2) comportant une cuve de cuisson (3) configurée pour recevoir un bain de cuisson, un couvercle (4) mobile entre une position d'ouverture et une position de fermeture, et un dispositif de chauffage configuré pour chauffer le bain de cuisson. L'appareil de cuisson électrique comporte un circuit d'évacuation de vapeur (18) comprenant au moins un orifice d'évacuation de vapeur (19) et un dispositif de guidage de flux (23). Le dispositif de guidage de flux (23) comprend une paroi de guidage supérieure (26) et une paroi de guidage inférieure (27) délimitant entre elles un passage d'écoulement en chicane (28). La paroi de guidage inférieure (27) est configurée pour s'étendre au moins en partie à l'aplomb et en dessous d'un bord longitudinal inférieur (26.1) de la paroi de guidage supérieure (26) lorsque le couvercle (4) est dans la position d'ouverture.

## Description

### Domaine technique

La présente invention concerne le domaine technique des appareils électroménagers de cuisson comprenant une cuve de cuisson et un couvercle. Plus particulièrement, la présente invention concerne la récupération des condensats générés lors de l'utilisation d'appareil de cuisson électrique à bain de cuisson.

### Etat de la technique

Il est connu de l'art antérieur d'utiliser un appareil de cuisson électrique à bain de cuisson configuré pour la cuisson d'aliment et comportant :
- un boîtier comportant une cuve de cuisson configurée pour recevoir un bain de cuisson ;
- un couvercle mobile autour d'un axe de pivotement entre une position d'ouverture dans laquelle le couvercle autorise un accès à la cuve de cuisson, et une position de fermeture dans laquelle le couvercle empêche l'accès à la cuve de cuisson et délimite, avec la cuve de cuisson, une chambre de cuisson ;
- un dispositif de chauffage configuré pour chauffer le bain de cuisson ; et
- un circuit d'évacuation de vapeur comprenant au moins un orifice d'évacuation de vapeur prévu sur le couvercle, le circuit d'évacuation de vapeur étant configuré pour acheminer un flux de vapeur provenant de la chambre de cuisson jusqu'à l'au moins un orifice d'évacuation de vapeur lorsque le couvercle est dans la position de fermeture.

Un tel dispositif permet à un utilisateur de réaliser la cuisson d'aliments dans un bain de cuisson, tel que de l'huile par exemple, et ceci dans une chambre de cuisson qui est délimitée en partie par le couvercle.

Cependant, un tel dispositif présente des inconvénients majeurs, le premier étant l'écoulement incontrôlé des condensats présents dans le circuit d'évacuation de vapeur lors de l'ouverture du couvercle ; en effet, lesdits condensats peuvent s'écouler, depuis le circuit d'évacuation de vapeur et au travers de l'au moins un orifice d'évacuation de vapeur, de façon gravitaire à l'extérieur de l'appareil de cuisson électrique et ainsi se répandre sur le plan de travail ou sur la surface sur laquelle repose le boîtier. En outre, lorsque le couvercle est dans la position de fermeture, le flux de vapeur provenant de la chambre de cuisson entraîne avec lui des condensats en suspension, lesquels sont susceptibles de se condenser autour de l'orifice d'évacuation de vapeur ou à l'extérieur de l'appareil de cuisson électrique.

### Résumé de l'invention

Le problème technique à la base de l'invention consiste donc à fournir un appareil de cuisson électrique, conformé pour la cuisson d'aliments dans un bain de cuisson, qui soit de structure simple, compacte et économique, tout en permettant la récupération des condensats générés lors de la cuisson des aliments.

A cet effet, la présente invention concerne un appareil de cuisson électrique à bain de cuisson, tel qu'une friteuse électrique à bain d'huile par exemple, configuré pour la cuisson d'aliment et comportant :
- un boîtier comportant une cuve de cuisson configurée pour recevoir un bain de cuisson ;
- un couvercle mobile autour d'un axe de pivotement entre une position d'ouverture dans laquelle le couvercle autorise un accès à la cuve de cuisson, et une position de fermeture dans laquelle le couvercle empêche l'accès à la cuve de cuisson et délimite, avec la cuve de cuisson, une chambre de cuisson ;
- un dispositif de chauffage configuré pour chauffer le bain de cuisson ; et
- un circuit d'évacuation de vapeur comprenant au moins un orifice d'évacuation de vapeur prévu sur le couvercle, le circuit d'évacuation de vapeur étant configuré pour acheminer un flux de vapeur provenant de la chambre de cuisson jusqu'à l'au moins un orifice d'évacuation de vapeur lorsque le couvercle est dans la position de fermeture,
dans lequel le circuit d'évacuation de vapeur comporte un dispositif de guidage de flux disposé dans le couvercle et comprenant une paroi de guidage supérieure et une paroi de guidage inférieure délimitant entre elles un passage d'écoulement en chicane relié fluidiquement à l'au moins un orifice d'évacuation de vapeur, la paroi de guidage inférieure étant configurée pour s'étendre au moins en partie à l'aplomb et en dessous d'un bord longitudinal inférieur de la paroi de guidage supérieure lorsque le couvercle est dans la position d'ouverture, de telle sorte que des condensats présents sur la paroi de guidage supérieure sont aptes à s'écouler, par gravité et depuis la paroi de guidage supérieure, sur la paroi de guidage inférieure lorsque le couvercle est dans la position d'ouverture.

En d'autres termes, la paroi de guidage supérieure est configurée pour permettre un écoulement par gravité des condensats, présents sur la paroi de guidage supérieure, sur la paroi de guidage inférieure lorsque le couvercle est déplacé dans la position d'ouverture. Ainsi, la paroi de guidage inférieure est configurée pour collecter des condensats chutant par gravité depuis la paroi de guidage supérieure.

Une telle configuration de l'appareil de cuisson électrique permet, lorsque le couvercle est déplacé dans la position d'ouverture, d'autoriser un écoulement gravitaire des condensats depuis la paroi de guidage supérieure jusqu'à la paroi de guidage inférieure, et ainsi d'éviter un écoulement non-contrôlé des condensats dans ou à l'extérieur de l'appareil de cuisson électrique.

Une telle configuration de l'appareil de cuisson électrique, et plus particulièrement de la paroi de guidage inférieure et de la paroi de guidage supérieure, permet, lorsque le couvercle est dans la position de fermeture, de générer un obstacle destiné à ralentir et à détourner le flux de vapeur. Dans l'utilisation présentée de l'appareil de cuisson électrique, un tel passage d'écoulement en chicane permet de favoriser la séparation entre les condensats et le flux de vapeur provenant de la chambre de cuisson.

L'appareil de cuisson électrique peut en outre présenter une ou plusieurs des caractéristiques suivantes, qui peuvent être prises seules ou en combinaison.

Selon un mode de réalisation de l'invention, la paroi de guidage supérieure est configurée pour s'étendre vers le bas lorsque le couvercle occupe la position de fermeture et que le boîtier repose sur une surface horizontale, et la paroi de guidage inférieure est configurée pour s'étendre vers le haut lorsque le couvercle occupe la position de fermeture et que le boîtier repose sur une surface horizontale.

Selon un mode de réalisation de l'invention, la paroi de guidage inférieure s'étend depuis une paroi inférieure du dispositif de guidage de flux, et la paroi de guidage supérieure s'étend depuis une paroi supérieure du dispositif de guidage de flux.

Selon un mode de réalisation de l'invention, la paroi de guidage supérieure et la paroi de guidage inférieure sont chacune configurées pour être inclinées par rapport à l'horizontale lorsque le couvercle occupe la position d'ouverture et que le boîtier repose sur une surface horizontale.

Selon un mode de réalisation de l'invention, le couvercle comporte une chambre interne dans laquelle est disposé le dispositif de guidage de flux. En d'autres termes, le dispositif de guidage de flux est distinct du couvercle et est rapporté dans celui-ci.

Selon un mode de réalisation de l'invention, l'au moins un orifice d'évacuation de vapeur débouche dans la chambre interne.

Selon un mode de réalisation de l'invention, l'au moins un orifice d'évacuation de vapeur comporte une paroi inférieure qui est inclinée vers le bas et vers l'intérieur de la chambre interne lorsque le couvercle est dans la position de fermeture. Une telle configuration de l'invention permet avantageusement de limiter la quantité de condensat s'écoulant par l'au moins un orifice d'évacuation de vapeur lorsque le couvercle est dans la position de fermeture.

Selon un mode de réalisation de l'invention, le couvercle comporte une pluralité d'orifices d'évacuation de vapeur, qui sont par exemple disposés dans une partie arrière du couvercle.

Selon un mode de réalisation de l'invention, le circuit d'évacuation de vapeur est prévu dans le couvercle.

Selon un mode de réalisation de l'invention, le dispositif de guidage de flux est monobloc, c'est-à-dire qu'il est réalisé en une seule pièce.

Selon un mode de réalisation de l'invention, le dispositif de guidage de flux comporte une ouverture d'entrée de flux configurée pour s'étendre au moins en partie en regard de la chambre de cuisson et une ouverture de sortie de flux configurée pour s'étendre au moins en partie en regard de l'au moins un orifice d'évacuation de vapeur.

Selon un mode de réalisation de l'invention, la paroi de guidage supérieure et la paroi de guidage inférieure sont décalées latéralement l'une par rapport à l'autre lorsque le couvercle occupe la position de fermeture. En d'autres termes, la paroi de guidage supérieure et la paroi de guidage inférieure sont prévues chacune à une distance différente l'une de l'autre par rapport à un axe central de la cuve de cuisson, lorsque le couvercle est dans la position de fermeture.

Selon un mode de réalisation de l'invention, la paroi de guidage inférieure comporte un bord longitudinal supérieur configuré pour délimiter au moins en partie, avec le bord longitudinal inférieur de la paroi de guidage supérieure, un orifice de passage de vapeur délimitant en partie le passage d'écoulement en chicane.

Selon un mode de réalisation de l'invention, le bord longitudinal supérieur de la paroi de guidage inférieure et le bord longitudinal inférieur de la paroi de guidage supérieure s'étendent sensiblement dans un même plan qui est sensiblement horizontal lorsque le couvercle est dans la position de fermeture. Une telle configuration de l'orifice de passage de vapeur permet de détourner le flux de vapeur vers le haut afin de séparer gravitairement les condensats présents dans le flux de vapeur ; et ainsi d'augmenter significativement l'efficacité de séparation entre la vapeur et les condensats à l'intérieur du circuit d'évacuation de vapeur.

Selon un mode de réalisation de l'invention, la paroi de guidage inférieure comporte un bord longitudinal inférieur qui est configuré pour être situé à une altitude inférieure à celle du bord longitudinal supérieur de la paroi de guidage inférieure, lorsque le couvercle est dans la position d'ouverture.

Selon un mode de réalisation de l'invention, la paroi de guidage supérieure comporte un bord longitudinal inférieur qui est configuré pour être situé à une altitude inférieure à celle du bord longitudinal supérieur de la paroi de guidage supérieure, lorsque le couvercle est dans la position d'ouverture.

Selon un mode de réalisation de l'invention, le dispositif de guidage de flux comporte au moins une paroi de renfort qui s'étend selon un plan sensiblement vertical et qui est configurée pour assurer la tenue mécanique du dispositif de guidage de flux. De façon avantageuse, l'au moins une paroi de renfort relie mécaniquement la paroi de guidage inférieure à la paroi de guidage supérieure.

Selon un mode de réalisation de l'invention, le dispositif de guidage de flux comporte au moins un orifice d'écoulement configuré pour autoriser un écoulement des condensats à l'extérieur du dispositif de guidage de flux.

Selon un mode de réalisation de l'invention, l'au moins un orifice d'écoulement est prévu dans une paroi inférieure du dispositif de guidage de flux.

Selon un mode de réalisation de l'invention, la paroi de guidage inférieure est configurée pour guider les condensats, collectés par la paroi de guidage inférieure, vers l'au moins un orifice d'écoulement, lorsque le couvercle occupe la position d'ouverture.

Selon un mode de réalisation de l'invention, l'au moins un orifice d'écoulement est adjacent à une portion inférieure de la paroi de guidage inférieure, de sorte à faciliter l'écoulement des condensats depuis la paroi de guidage supérieure et la paroi de guidage inférieure jusqu'à l'extérieur du circuit d'évacuation de vapeur.

Selon un mode de réalisation de l'invention, l'au moins un orifice d'écoulement comporte au moins un orifice d'écoulement situé en amont de la paroi de guidage inférieure.

Selon un mode de réalisation de l'invention, l'appareil de cuisson électrique comporte :
- un bac de collecte de condensat, et
- un circuit d'acheminement de condensat relié fluidiquement à l'au moins un orifice d'écoulement et configuré pour acheminer les condensats provenant du circuit d'évacuation de vapeur jusqu'au bac de collecte de condensat.

Selon un mode de réalisation de l'invention, le bac de collecte de condensat est amovible par rapport au boîtier. Une telle configuration du bac de collecte de condensat permet avantageusement de vidanger le contenu du bac de collecte de condensat aisément et sans manipulation de l'ensemble de l'appareil de cuisson électrique.

Selon un mode de réalisation de l'invention, le bac de collecte de condensat comporte un bord périphérique supérieur qui délimite une ouverture supérieure.

Selon un mode de réalisation de l'invention, l'au moins un orifice d'évacuation de vapeur est allongé et comporte une extrémité inférieure configurée pour s'étendre à l'aplomb du bac de collecte de condensat lorsque le couvercle est dans la position d'ouverture.

Selon un mode de réalisation de l'invention, l'au moins un orifice d'évacuation de vapeur s'étend selon un plan d'extension qui est sensiblement vertical lorsque le boîtier repose sur une surface horizontale et que le couvercle est dans la position de fermeture.

Selon un mode de réalisation de l'invention, l'appareil de cuisson électrique comporte un dispositif de collecte comprenant au moins un orifice d'évacuation de condensat, le dispositif de collecte étant configuré pour s'étendre au moins en partie à l'intérieur de la chambre de cuisson et pour collecter, lorsque le couvercle est dans la position de fermeture, des condensats provenant de la cuisson des aliments, le circuit d'acheminement de condensat étant configuré pour acheminer des condensats provenant de l'au moins un orifice d'évacuation de condensat jusqu'au bac de collecte de condensat.

Selon un mode de réalisation de l'invention, le circuit d'acheminement de condensat est relié fluidiquement à l'au moins un orifice d'évacuation de condensat.

Selon un mode de réalisation de l'invention, le circuit d'acheminement de condensat comporte une chambre de collecte prévue dans le couvercle et configurée pour collecter les condensats s'écoulant depuis l'au moins un orifice d'écoulement.

Selon un mode de réalisation de l'invention, l'au moins un orifice d'écoulement du circuit d'évacuation de vapeur est configuré pour s'étendre à l'aplomb de la chambre de collecte lorsque le couvercle est dans la position d'ouverture.

Selon un mode de réalisation de l'invention, l'au moins un orifice d'écoulement du circuit d'évacuation de vapeur est configuré pour s'étendre à l'aplomb de la chambre de collecte lorsque le couvercle est dans la position de fermeture.

Selon un mode de réalisation de l'invention, le couvercle comporte au moins une nervure périphérique qui s'étend depuis une surface interne du couvercle, et par exemple une surface interne de la chambre interne, et sur le pourtour de l'au moins un orifice d'évacuation de vapeur.

Selon un mode de réalisation de l'invention, l'au moins un orifice d'évacuation de vapeur s'étend selon un plan d'extension qui est sensiblement vertical lorsque le boîtier repose sur une surface horizontale et que le couvercle est dans la position de fermeture.

Selon un mode de réalisation de l'invention, l'au moins un orifice d'évacuation de vapeur comporte une paroi de guidage inférieure qui est inclinée vers le bas et vers l'intérieur de la chambre interne lorsque le couvercle est dans la position de fermeture. Une telle configuration de l'invention permet avantageusement de limiter la quantité de condensat s'écoulant par l'au moins un orifice d'évacuation de vapeur lorsque le couvercle est dans la position de fermeture.

Selon un mode de réalisation de l'invention, l'au moins un orifice d'écoulement comporte au moins un orifice périphérique prévu dans une portion périphérique du dispositif de guidage de flux et configuré pour autoriser un écoulement des condensats présents entre la paroi de guidage inférieure et la surface interne du couvercle. Une telle configuration de l'au moins un orifice d'écoulement permet d'autoriser l'évacuation des condensats collectés sur la surface interne du couvercle en direction de la chambre de collecte.

Selon un mode de réalisation de l'invention, le couvercle comporte une pluralité de nervures périphériques s'étendant chacune sur le pourtour d'un orifice d'évacuation de vapeur respectif et configurées pour délimiter des canaux d'écoulement de condensat entre les orifices d'évacuation de vapeur. Une telle configuration de l'appareil de cuisson électrique permet avantageusement de guider les condensats jusqu'à une portion inférieure de la chambre interne lorsque le couvercle est dans la position d'ouverture.

Selon un mode de réalisation de l'invention, chaque canal d'écoulement de condensat est relié fluidiquement l'au moins un orifice d'écoulement du circuit d'évacuation de vapeur. Une telle configuration de l'invention permet de maximiser la quantité de condensat récupérée dans le bac de collecte de condensat.

Selon un mode de réalisation de l'invention, l'appareil de cuisson électrique comporte un bac de collecte de condensat configuré pour collecter des condensats s'écoulant depuis l'au moins un orifice d'écoulement et / ou depuis l'au moins un orifice d'évacuation de condensat.

Selon un mode de réalisation de l'invention, le bac de collecte de condensat comporte un bord périphérique supérieur qui délimite une ouverture supérieure.

Selon un mode de réalisation de l'invention, le bac de collecte de condensat est configuré pour saillie au-delà d'une paroi latérale du boîtier de telle sorte qu'une portion de l'ouverture supérieure du bac de collecte de condensat est située au-delà de ladite paroi latérale du boîtier, le bac de collecte de condensat étant configuré pour collecter des condensats s'écoulant depuis au moins un orifice d'évacuation de vapeur situé à l'aplomb de ladite portion de l'ouverture supérieure du bac de collecte de condensat lorsque le couvercle est dans la position d'ouverture.

En d'autres termes, le bord périphérique supérieur du bac de collecte de condensat comporte une portion de bord configurée pour être en saillie par rapport à la paroi latérale du boîtier, de telle sorte que l'ouverture supérieure du bac de collecte de condensat s'étend en partie au-delà de ladite paroi latérale du boîtier. Par faire saillie au-delà de la paroi latérale du boîtier, on entend que le bac de collecte de condensat dépasse horizontalement de la paroi latérale du boîtier et fait saillie vers l'extérieur de l'appareil de cuisson électrique

Selon un mode de réalisation de l'invention, l'appareil de cuisson électrique comporte une fenêtre de visualisation prévue sur le couvercle et configurée pour permettre à un utilisateur de visualiser le contenu de la chambre de cuisson lorsque le couvercle est dans la position de fermeture.

Selon un mode de réalisation de l'invention, la fenêtre de visualisation est un hublot.

Selon un mode de réalisation de l'invention, la fenêtre de visualisation est au moins en partie transparente au rayonnement lumineux, et peut par exemple être réalisée au moins en partie en un matériau pouvant être une matière synthétique transparente, tel qu'un polymère de type polycarbonate par exemple, ou une matière minérale transparente, tel que du verre, du verre borosilicate, du cristal ou du quartz par exemple.

Selon un mode de réalisation de l'invention, le dispositif de collecte comporte un canal de collecte prévu sur le couvercle, le canal de collecte comportant une portion de collecte configurée pour être située au moins en partie à l'aplomb d'une zone d'écoulement, située dans la périphérie de la fenêtre de visualisation, et pour collecter des condensats s'écoulant depuis la fenêtre de visualisation lorsque le couvercle est en position de fermeture, et une portion de guidage configurée pour guider les condensats, collectés par la portion de collecte, à l'extérieur de la chambre de cuisson lorsque le couvercle est déplacé vers la position d'ouverture.

Selon un mode de réalisation de l'invention, le canal de collecte est fixé au couvercle, de telle sorte qu'il est solidaire en pivotement avec le couvercle.

Selon un mode de réalisation de l'invention, le canal de collecte comporte l'au moins un orifice d'évacuation de condensat, la portion de guidage étant configurée pour guider des condensats collectés par le canal de collecte jusqu'à l'au moins un orifice d'évacuation de condensat.

Selon un mode de réalisation de l'invention, l'au moins un orifice d'évacuation de condensat est prévu dans une partie arrière du couvercle.

Selon un mode de réalisation de l'invention, l'au moins un orifice d'évacuation de condensat est configuré pour être le point le plus bas du canal de collecte lorsque le couvercle est dans la position d'ouverture.

Selon un mode de réalisation de l'invention, le circuit d'acheminement de condensat comporte une chambre de collecte reliée fluidiquement à l'au moins un orifice d'évacuation de condensat et configurée pour collecter les condensats provenant de l'au moins un orifice d'évacuation de condensat.

Selon un mode de réalisation de l'invention, la chambre de collecte loge au moins en partie la liaison pivot configurée pour autoriser le pivotement du couvercle entre la position de fermeture et la position d'ouverture.

Selon un mode de réalisation de l'invention, la chambre de collecte est prévue dans le couvercle. En d'autres termes, la chambre de collecte est solidaire en pivotement avec le couvercle.

Selon un mode de réalisation de l'invention, la chambre de collecte comporte au moins un orifice de drainage.

Selon un mode de réalisation de l'invention, la chambre intermédiaire est prévue dans la partie arrière du boîtier.

Selon un mode de réalisation de l'invention, la chambre intermédiaire est configurée pour s'étendre au moins en partie à l'aplomb et en dessous de la chambre de collecte.

Selon un mode de réalisation de l'invention, la chambre intermédiaire comporte au moins un orifice de sortie latéral, le bac de collecte de condensat étant configuré pour collecter d'éventuels condensats s'écoulant par gravité depuis l'au moins un orifice de sortie latéral.

Selon un mode de réalisation de l'invention, le circuit d'acheminement de condensat comporte un orifice de sortie inférieur configuré pour autoriser un écoulement des condensats depuis le circuit d'acheminement de condensat, et plus précisément depuis la chambre intermédiaire, jusque dans le bac de collecte de condensat.

Selon un mode de réalisation de l'invention, l'orifice de sortie inférieur est configuré pour s'étendre à l'aplomb, et par exemple en regard, de l'ouverture supérieure du bac de collecte de condensat.

Selon un mode de réalisation de l'invention, le bac de collecte de condensat comporte une paroi de fond, l'ouverture supérieure du bac de collecte de condensat présentant une section de passage qui est supérieure à la superficie de la paroi de fond. En d'autres termes, le bac de collecte de condensat est évasé en direction de l'ouverture supérieure.

Selon un mode de réalisation de l'invention, lorsque le couvercle est dans la position d'ouverture et que le boîtier repose sur une surface horizontale, le couvercle est incliné selon un angle strictement inférieur à 90°, et par exemple strictement inférieur à 80°, par rapport à un axe vertical. Une telle configuration de l'invention permet d'assurer un écoulement des condensats depuis le dispositif de collecte jusqu'au circuit d'acheminement de condensat lorsque le couvercle occupe la position d'ouverture.

### Brève description des figures

La présente invention sera bien comprise à l'aide de la description qui suit en référence aux figures annexées, dans lesquelles des signes de références identiques correspondent à des éléments structurellement et / ou fonctionnellement identiques ou similaires.
[Fig 1] est une vue en perspective d'un appareil de cuisson électrique selon un mode de réalisation de l'invention et comportant un couvercle dans une position d'ouverture ;
[Fig 2] est une vue en perspective de l'appareil de cuisson électrique de la figure 1 dans lequel le couvercle est dans une position de fermeture ;
[Fig 3] est une vue partielle en perspective de l'appareil de cuisson électrique de la figure 1 ;
[Fig 4] est une vue partielle en perspective, tronquée selon un premier plan de coupe vertical, d'une partie arrière de l'appareil de cuisson électrique de la figure 1 ;
[Fig 5] est une vue partielle en perspective, tronquée selon un deuxième plan de coupe vertical décalé par rapport au premier plan de coupe vertical, de la partie arrière de l'appareil de cuisson électrique de la figure 4 ;
[Fig 6] est une vue partielle en perspective, tronquée selon un troisième plan de coupe vertical décalé par rapport au premier et au deuxième plan de coupe vertical, de la partie arrière de l'appareil de cuisson électrique de la figure 5 ;
[Fig 7] est une vue en perspective d'une paroi interne du couvercle de l'appareil de cuisson électrique de la figure 1 ;
[Fig 8] est une vue partielle en perspective de la partie arrière de l'appareil de cuisson électrique de la figure 5, représentant un dispositif de collecte, le circuit d'acheminement de condensat et le bac de collecte de condensat ;
[Fig 9] est une vue partielle en perspective, tronquée selon le deuxième plan de coupe vertical et représentant la partie arrière de l'appareil de cuisson électrique de la figure 5 ;
[Fig 10] est une vue partielle en perspective du couvercle de la figure 7, laquelle intègre un dispositif de guidage de flux ;
[Fig 11] est une vue partielle en perspective, tronquée selon le deuxième plan de coupe vertical, du dispositif de guidage de flux de la figure 10 ;
[Fig 12] est une vue en perspective du dispositif de guidage de flux de la figure 10.

### Description détaillée

Dans le présent document, les termes « avant », « arrière », « supérieur » et « inférieur » sont définis par rapport à une utilisation normale de l'appareil de cuisson électrique durant laquelle le boîtier repose sur une surface horizontale.

A défaut de stipulation contraire, le terme « sensiblement » signifie, dans le présent document, « exactement ou à 10% ou à 10° près ».

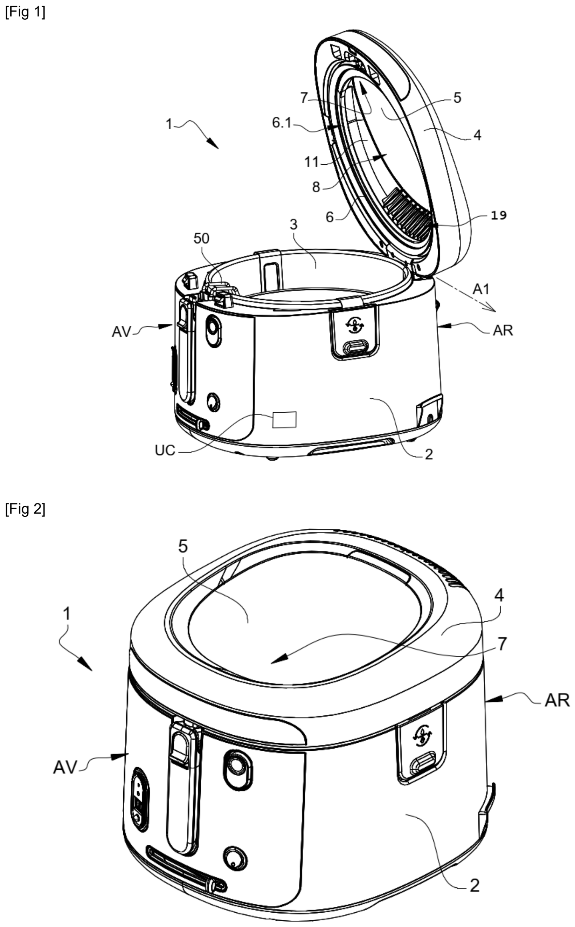

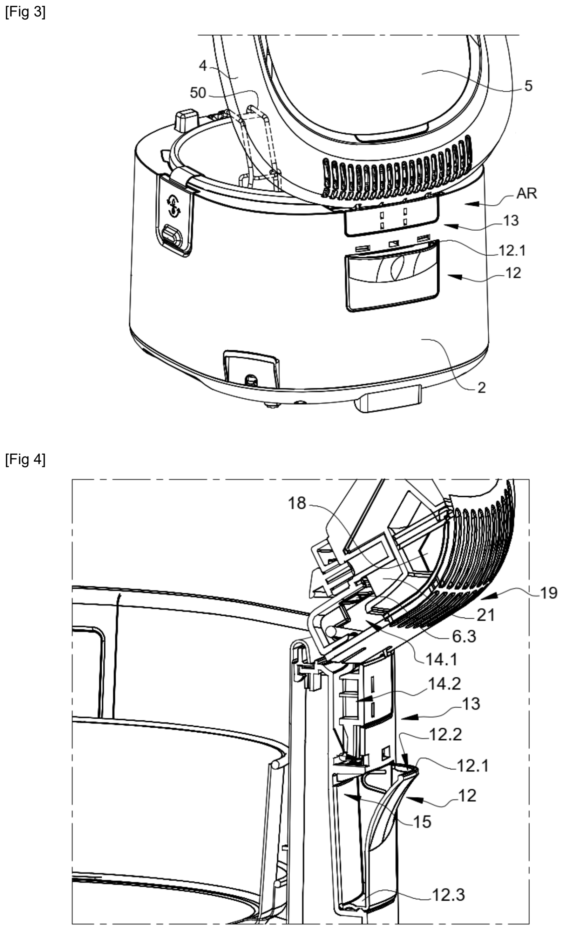

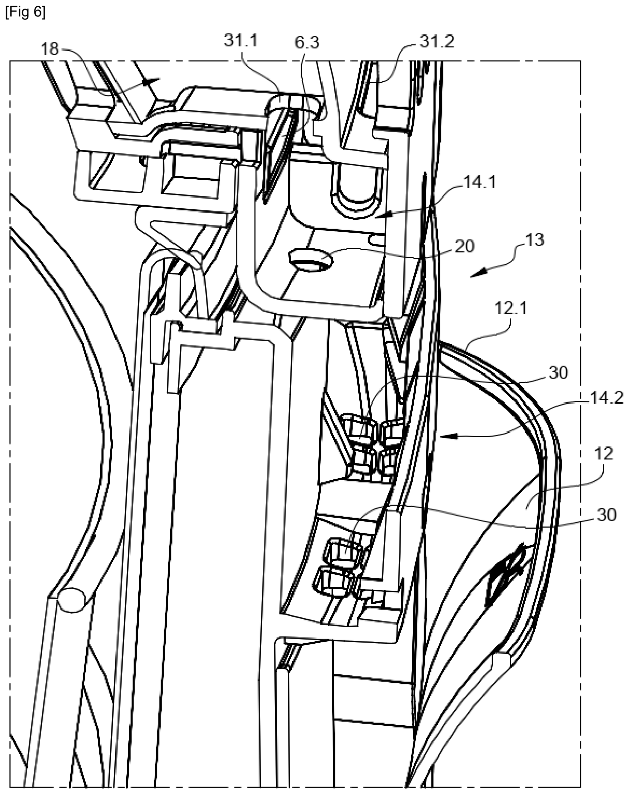

Les figures 1 à 12 représentent tout ou partie d'un appareil de cuisson électrique 1, tel qu'une friteuse électrique à bain d'huile par exemple, configuré pour cuire des aliments et selon un mode de réalisation de l'invention. L'appareil de cuisson électrique 1 comprend notamment un boîtier 2 comportant une cuve de cuisson 3 configurée pour recevoir un bain de cuisson, un couvercle 4 mobile entre une position de fermeture et une position d'ouverture, et un dispositif de chauffage 50 (voir figures 1 et 3) configuré pour chauffer le bain de cuisson. En outre, l'appareil de cuisson électrique 1 comporte une unité de commande UC prévue dans le boîtier 2 et configurée pour commander le fonctionnement de l'appareil de cuisson électrique 1.

De façon avantageuse, le couvercle 4 est monté pivotant par rapport au boîtier 2 autour d'un axe de pivotement A1 entre la position de fermeture dans laquelle le couvercle 4 délimite, avec la cuve de cuisson 3, une chambre de cuisson et empêche un accès à la cuve de cuisson 3, et la position d'ouverture dans laquelle le couvercle 4 autorise l'accès à la cuve de cuisson. Selon le mode de réalisation de l'invention représenté sur les figures 1 à 12, l'axe de pivotement A1 est situé dans une partie arrière AR du boîtier 2, et est sensiblement horizontal lorsque le boîtier 2 repose sur une surface horizontale.

L'appareil de cuisson électrique 1 comporte en outre une fenêtre de visualisation 5, telle qu'un hublot, prévue sur le couvercle 4 et configurée pour permettre à un utilisateur de visualiser le contenu de la chambre de cuisson lorsque le couvercle 4 est dans la position de fermeture, et un dispositif de collecte 6 configuré pour s'étendre en partie à l'intérieur de la chambre de cuisson et comprenant un canal de collecte 6.1 configuré pour collecter des condensats formés sur la fenêtre de visualisation 5 et s'écoulant depuis une zone d'écoulement 7 de la fenêtre de visualisation 5 lorsque le couvercle 4 est dans la position de fermeture. En outre, le dispositif de collecte 6 est configuré pour guider les condensats collectés jusqu'à l'extérieur de la chambre de cuisson. Avantageusement, la zone d'écoulement 7 est située dans une partie avant du couvercle 4.

Plus particulièrement, la fenêtre de visualisation 5 est transparente au rayonnement lumineux, et peut par être réalisée en un matériau conforme à une utilisation dans un appareil de cuisson électrique 1 ; ledit matériau pouvant être une matière synthétique transparente tel qu'un polymère de type polycarbonate par exemple, ou une matière minérale transparente tel que du verre, du verre borosilicate, du cristal ou du quartz par exemple.

Selon le mode de réalisation de l'invention, la fenêtre de visualisation 5, et plus précisément une paroi interne 8 de la fenêtre de visualisation 5, est sensiblement plane et est inclinée vers le bas et en direction d'une face avant AV du boîtier 2 ; la zone d'écoulement 7 de la fenêtre de visualisation 5 étant la portion périphérique la plus basse de la fenêtre de visualisation 5 lorsque le couvercle 4 est dans la position de fermeture et que le boîtier 2 repose sur une surface horizontale. Avantageusement, la fenêtre de visualisation 5 est inclinée par rapport à l'horizontal selon un angle d'inclinaison supérieur à 5 degrés, avantageusement supérieur à 6 degrés, et par exemple supérieur à 8 degrés, lorsque le couvercle 4 est dans la position de fermeture et que le boîtier 2 repose sur une surface horizontale. Une telle configuration de l'appareil de cuisson électrique 1 permet à l'utilisateur d'avoir une visibilité accrue du contenu de la chambre de cuisson, tout en assurant un écoulement efficace des condensats depuis la fenêtre de visualisation 5 jusqu'au canal de collecte 6.1, en évitant que les condensats ne tombent par gravité dans le bain de cuisson avant d'atteindre la zone d'écoulement 7.

Le canal de collecte 6.1, représenté plus spécifiquement sur la figure 1, est solidaire en pivotement avec le couvercle 4, et comporte une portion de collecte comportant une ouverture supérieure configurée pour être située au moins en partie à l'aplomb de la zone d'écoulement 7 de manière à autoriser un écoulement gravitaire des condensats depuis la zone d'écoulement 7 de la fenêtre de visualisation 5 jusqu'à l'intérieur du volume défini par la portion de collecte, lorsque le couvercle 4 est en position de fermeture. Le canal de collecte 6.1 comporte en outre une portion de guidage configurée pour guider les condensats, collectés par la portion de collecte, à l'extérieur de la chambre de cuisson lorsque le couvercle 4 est déplacé vers la position d'ouverture. Une telle configuration de l'appareil de cuisson électrique 1 permet avantageusement de récupérer les condensats, générés sur la paroi interne 8 de la fenêtre de visualisation 5 lors de la cuisson d'aliments, au niveau de la portion de collecte du canal de collecte 6.1. Ainsi, les condensats sont récupérés avant qu'ils ne retombent dans le bain de cuisson, ce qui permet de prévenir des projections du liquide à haute température composant le bain de cuisson à l'extérieur du boîtier 2 et potentiellement sur l'utilisateur.

Selon le mode de réalisation de l'invention, le canal de collecte 6.1 est annulaire et s'étend sensiblement sur le pourtour de la cuve de cuisson 3 lorsque le couvercle 4 est dans la position de fermeture. La portion de collecte peut par exemple présenter une largeur supérieure à la largeur de la portion de guidage afin de maximiser la récupération des condensats s'écoulant depuis la fenêtre de visualisation 5. Le canal de collecte 6.1 peut être monobloc, c'est-à-dire être réalisé en une seule pièce, et comporte au moins un orifice d'évacuation de condensat 6.3 prévu dans une partie arrière du couvercle 4, la portion de guidage étant configurée pour guider des condensats collectés par le canal de collecte 6.1 jusqu'à l'au moins un orifice d'évacuation de condensat 6.3. Avantageusement, l'au moins un orifice d'évacuation de condensat 6.3 est configuré pour être le point le plus bas du canal de collecte 6.1 lorsque le couvercle 4 est dans la position d'ouverture.

Selon le mode de réalisation de l'invention, la portion de guidage du canal de collecte 6.1 est contiguë à la portion de collecte, c'est-à-dire s'étend dans le prolongement de la portion de collecte. Avantageusement, la portion de guidage est située à une altitude inférieure à celle de la portion de collecte lorsque le couvercle 4 occupe la position de fermeture, de sorte à autoriser un écoulement gravitaire des condensats depuis la portion de collecte jusqu'à la portion de guidage lorsque le couvercle 4 est dans la position de fermeture et que le boîtier 2 repose sur une surface horizontale.

Selon le mode de réalisation de l'invention, la portion de guidage s'étend selon un plan d'extension qui est sensiblement horizontal lorsque le boîtier 2 repose sur une surface horizontale et que le couvercle 4 est dans la position de fermeture. Alternativement, la portion de guidage pourrait s'étendre selon un plan d'extension qui est incliné en direction de la partie arrière AR du boîtier 2 lorsque le boîtier 2 repose sur une surface horizontale et que le couvercle 4 est dans la position de fermeture. Une telle configuration permet d'éviter l'accumulation des condensats à l'avant de la portion de guidage.

La portion de guidage forme un conduit de guidage, c'est-à-dire un canal de guidage à section fermée. Une telle configuration de l'invention permet d'éviter que les condensats présents dans le canal de collecte 6.1 ne s'accumulent et ne débordent de la portion de guidage et ne retombent dans le bain de cuisson lorsque le couvercle 4 est déplacé vers la position d'ouverture après un cycle de cuisson par exemple. En effet, lors de l'ouverture du couvercle 4, les condensats vont, sous l'effet de la gravité, être convoyés simultanément vers le point le plus bas du canal de collecte 6.1, en l'occurrence la portion de guidage, ce qui pourrait conduire à un débordement localisé des condensats dans le cas où la portion de guidage présente une ouverture supérieure par exemple.

L'appareil de cuisson électrique 1 comporte en outre un bac de collecte de condensat 12 (voir figures 3 à 6), comportant un bord périphérique supérieur 12.1 qui délimite une ouverture supérieure 12.2, et un circuit d'acheminement de condensat 13 relié fluidiquement à l'au moins un orifice d'évacuation de condensat 6.3 et configuré pour acheminer des condensats provenant de l'au moins un orifice d'évacuation de condensat 6.3 jusqu'au bac de collecte de condensat 12. En outre, lorsque le couvercle 4 est dans la position d'ouverture et que le boîtier 2 repose sur une surface horizontale, le couvercle 4 est incliné selon un angle strictement inférieur à 90°, et par exemple strictement inférieur à 80°, par rapport à un axe vertical. Une telle configuration de l'invention permet d'assurer un écoulement des condensats depuis le dispositif de collecte 6 jusqu'au circuit d'acheminement de condensat 13, et finalement jusqu'au bac de collecte de condensat 12 lorsque le couvercle 4 est déplacé dans la position d'ouverture.

De façon avantageuse, et comme représenté sur les figures 4 à 6, le circuit d'acheminement de condensat 13 comporte une chambre de collecte 14.1, prévue dans le couvercle 4 (et par exemple dans une partie arrière du couvercle 4), qui est reliée fluidiquement à l'au moins un orifice d'évacuation de condensat 6.3 et est configurée pour collecter les condensats provenant de l'au moins un orifice d'évacuation de condensat 6.3. La chambre de collecte 14.1 est en outre configurée pour loger au moins en partie la liaison pivot du couvercle 4, et en particulier l'arbre de pivotement appartenant à ladite liaison pivot.

Le circuit d'acheminement de condensat 13 comporte en outre une chambre intermédiaire 14.2, prévue dans une partie arrière du boîtier 2, et configurée pour s'étendre en dessous de la chambre de collecte 14.1.

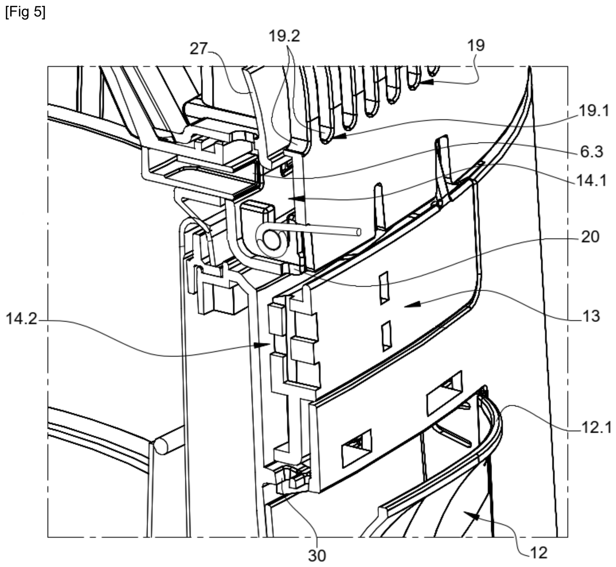

Selon le mode de réalisation de l'invention, et comme représenté plus spécifiquement sur la figure 5, la chambre de collecte 14.1 comporte au moins un orifice de drainage 20 prévu dans une paroi inférieure de la chambre de collecte 14.1 et configuré pour s'étendre sensiblement à l'aplomb de la chambre intermédiaire 14.2 lorsque le boîtier 2 repose sur une surface sensiblement horizontale, de telle sorte que la chambre intermédiaire 14.2 est reliée fluidiquement à la chambre de collecte 14.1. La chambre intermédiaire 14.2 comporte au moins un orifice de sortie inférieur 30 prévu dans une paroi inférieure de la chambre intermédiaire 14.2 et configuré pour s'étendre sensiblement à l'aplomb, et par exemple en regard, de l'ouverture supérieure 12.2 du bac de collecte de condensat 12 lorsque le boîtier 2 repose sur une surface sensiblement horizontale. Avantageusement, l'au moins un orifice de drainage 20 et l'au moins un orifice de sortie inférieur 30 sont respectivement configurés pour autoriser un écoulement par gravité des condensats depuis la chambre de collecte 14.1 vers la chambre intermédiaire 14.2, et pour autoriser un écoulement par gravité des condensats depuis la chambre intermédiaire 14.2 vers le bac de collecte de condensat 12.

Avantageusement, le bac de collecte de condensat 12 est prévu dans la partie arrière AR du boîtier 2, et plus précisément dans un logement de réception 15 du boîtier 2, et est amovible par rapport au boîtier 2. Une telle configuration du bac de collecte de condensat 12 permet avantageusement de vidanger le contenu du bac de collecte de condensat 12 aisément et sans manipulation de l'ensemble de l'appareil de cuisson électrique.

Selon le mode de réalisation représenté sur les figures, le bord périphérique supérieur 12.1 du bac de collecte de condensat 12, qui délimite l'ouverture supérieure 12.2, est configuré pour saillie au-delà d'une paroi latérale du boîtier 2 de telle sorte qu'une portion de l'ouverture supérieure 12.2 du bac de collecte de condensat 12 est située au-delà de ladite paroi latérale du boîtier 2. En outre, le bac de collecte de condensat 12 comporte une paroi de fond 12.3, et l'ouverture supérieure 12.2 du bac de collecte de condensat 12 présente une section de passage qui est supérieure à la superficie de la paroi de fond 12.3. En d'autres termes, le bac de collecte de condensat 12 est évasé en direction de l'ouverture supérieure 12.2.

Selon le mode de réalisation de l'invention représenté sur les figures, l'appareil de cuisson électrique 1 comporte un circuit d'évacuation de vapeur 18 comprenant des orifices d'évacuation de vapeur 19 prévus sur le couvercle 4 et configurés pour être relié fluidiquement à la chambre de cuisson lorsque le couvercle 4 est dans la position de fermeture. Ainsi, le circuit d'évacuation de vapeur 18 est plus particulièrement configuré pour acheminer un flux de vapeur depuis la chambre de cuisson jusqu'aux orifices d'évacuation de vapeur 19 lorsque le couvercle 4 est dans la position de fermeture. Les orifices d'évacuation de vapeur 19 sont donc configurés pour permettre l'évacuation d'un flux de vapeur, provenant de la chambre de cuisson, à l'extérieur de l'appareil de cuisson électrique 1.

Selon le mode de réalisation de l'invention représenté sur les figures, les orifices d'évacuation de vapeur 19 sont disposés dans une partie arrière du couvercle 4, et sont allongés et s'étendent chacun selon un plan d'extension qui est sensiblement vertical lorsque le boîtier 2 repose sur une surface horizontale et que le couvercle 4 est dans la position de fermeture.

De façon avantageuse, chaque orifice d'évacuation de vapeur 19 comporte une extrémité inférieure 19.1 configurée pour s'étendre à l'aplomb d'une portion de l'ouverture supérieure 12.2 du bac de collecte de condensat 12 lorsque le couvercle 4 est dans la position d'ouverture. Une telle configuration des orifices d'évacuation de vapeur 19 et du bac de collecte de condensat 12 permet de récupérer les condensats s'écoulant à l'extérieur du boîtier 2, et plus précisément par les orifices d'évacuation de vapeur 19, lorsque le couvercle 4 est dans la position d'ouverture, et donc d'éviter que les condensats et jus de cuisson ne se répandent sur la surface de travail sur laquelle est positionné l'appareil de cuisson électrique 1.

Comme représenté plus particulièrement sur la figure 5, chaque orifices d'évacuation de vapeur 19 comporte une paroi inférieure 19.2 qui est inclinée vers le bas et vers l'intérieur d'une chambre interne 22 lorsque le couvercle 4 est dans la position de fermeture. Une telle configuration de l'invention permet avantageusement de limiter la quantité de condensat susceptible de s'écouler par le ou chaque orifice d'évacuation de vapeur 19 lorsque le couvercle 4 est dans la position de fermeture.

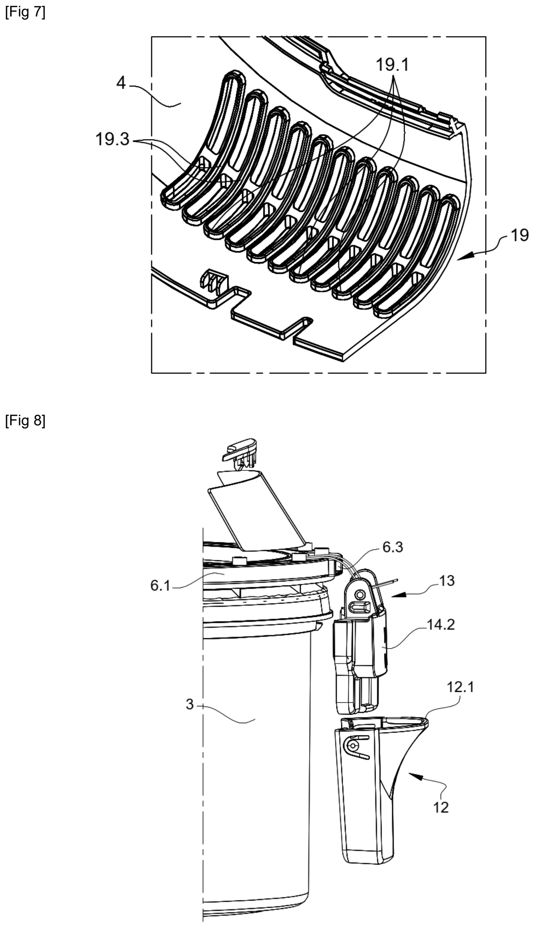

Le couvercle 4 comporte en outre des nervures périphériques 19.3 (voir figure 7) s'étendant chacune sur le pourtour d'un orifice d'évacuation de vapeur 19 respectif et configurées pour délimiter des canaux d'écoulement de condensat entre les orifices d'évacuation de vapeur 19. Les nervures périphériques 19.3 s'étendent depuis une surface interne du couvercle 4, et par exemple une surface interne de la chambre interne 22. Une telle configuration de l'appareil de cuisson électrique 1 permet avantageusement de guider les condensats jusqu'à une portion inférieure de la chambre interne 22 lorsque le couvercle 4 est dans la position d'ouverture. Les condensats provenant des canaux d'écoulement de condensat sont ensuite collectés par le circuit d'acheminement de condensat 13. Plus particulièrement, lesdits condensats sont collectés par la chambre de collecte 14.1 avant de s'écouler par l'au moins un orifice de drainage 20 dans la chambre intermédiaire 14.2, puis de rejoindre le bac de collecte de condensat 12 au travers de l'au moins un orifice de sortie inférieur 30.

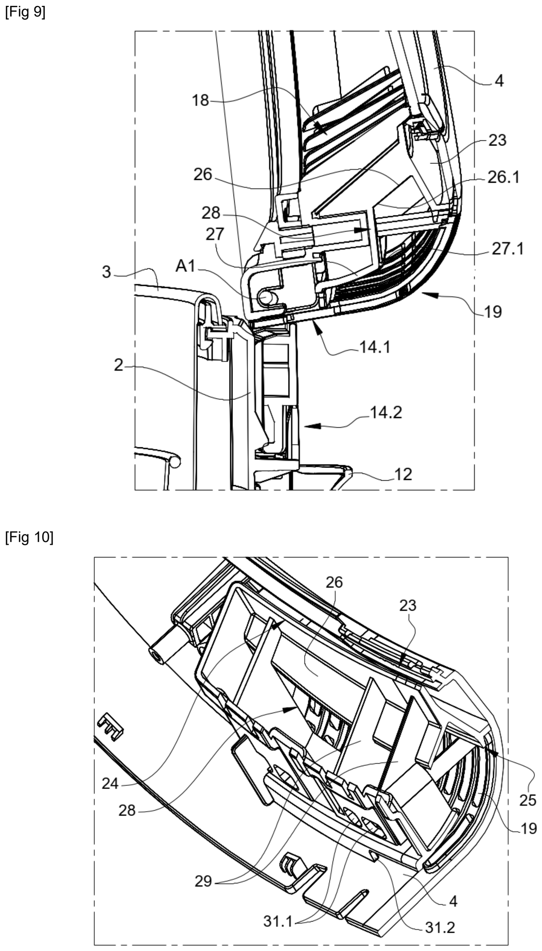

Comme montré notamment sur la figure 9, le circuit d'évacuation de vapeur 18 comporte un dispositif de guidage de flux 25 disposé dans une chambre interne 22 du couvercle 4. De façon avantageuse, le dispositif de guidage de flux 23 est monobloc, c'est-à-dire qu'il est réalisé en une seule pièce, et est distinct du couvercle 4. Avantageusement, les orifices d'évacuation de vapeur 19 débouchent dans la chambre interne 22.

Comme montré plus particulièrement sur les figures 9 à 12, le dispositif de guidage de flux 23 comporte une ouverture d'entrée de flux 24 configurée pour s'étendre en partie en regard de la chambre de cuisson et une ouverture de sortie de flux 25 configurée pour s'étendre en partie en regard des orifices d'évacuation de vapeur 19.

Le dispositif de guidage de flux 23 comprend en outre une paroi de guidage supérieure 26 et une paroi de guidage inférieure 27 délimitant entre elles un passage d'écoulement en chicane 28 relié fluidiquement aux orifices d'évacuation de vapeur 19. La paroi de guidage inférieure 27 s'étend depuis une paroi inférieure du dispositif de guidage de flux 23, tandis que la paroi de guidage supérieure 26 s'étend depuis une paroi supérieure du dispositif de guidage de flux 23.

La paroi de guidage supérieure 26 est plus particulièrement configurée pour s'étendre vers le bas lorsque le couvercle 4 occupe la position de fermeture et que le boîtier 2 repose sur une surface horizontale, tandis que la paroi de guidage inférieure 27 est plus particulièrement configurée pour s'étendre vers le haut lorsque le couvercle 4 occupe la position de fermeture et que le boîtier 2 repose sur une surface horizontale. De façon avantageuse, la paroi de guidage supérieure et la paroi de guidage inférieure sont chacune configurées pour être inclinées par rapport à l'horizontale lorsque le couvercle 4 occupe la position d'ouverture et que le boîtier repose sur une surface horizontale.

La paroi de guidage inférieure 27 est plus particulièrement configurée pour s'étendre en partie à l'aplomb et en dessous d'un bord longitudinal inférieur 26.1 de la paroi de guidage supérieure 26 lorsque le couvercle 4 est dans la position d'ouverture, de telle sorte que les condensats présents sur la paroi de guidage supérieure 26 peuvent s'écouler, par gravité et depuis la paroi de guidage supérieure 26, sur la paroi de guidage inférieure 27 lorsque le couvercle 4 est dans la position d'ouverture. Une telle configuration de l'appareil de cuisson électrique 1 permet, lorsque le couvercle 4 est déplacé dans la position d'ouverture, d'autoriser un écoulement gravitaire des condensats depuis la paroi de guidage supérieure 26 jusqu'à la paroi de guidage inférieure 27, et ainsi d'éviter un écoulement non-contrôlé des condensats dans ou à l'extérieur de l'appareil de cuisson électrique 1.

En outre, la présence de la paroi de guidage inférieure 27 et de la paroi de guidage supérieure 26, permet, lorsque le couvercle 4 est dans la position de fermeture, de générer un obstacle destiné à ralentir et à détourner le flux de vapeur. En particulier, le passage d'écoulement en chicane 28 permet de favoriser la séparation entre les condensats et le flux de vapeur provenant de la chambre de cuisson.

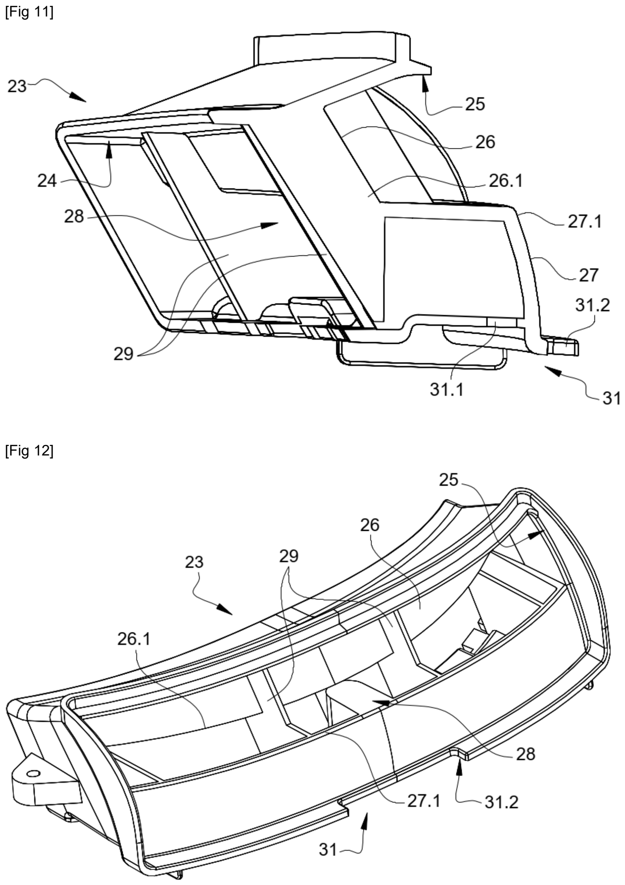

Comme montré notamment sur la figure 11, la paroi de guidage supérieure 26 et la paroi de guidage inférieure 27 sont décalées latéralement l'une par rapport à l'autre. En d'autres termes, la paroi de guidage supérieure 26 et la paroi de guidage inférieure 27 sont prévues chacune à une distance différente par rapport à un axe central de la cuve de cuisson 3, lorsque le couvercle 4 est dans la position de fermeture.

La paroi de guidage inférieure 27 comporte un bord longitudinal supérieur 27.1 configuré pour délimiter au moins en partie, avec le bord longitudinal inférieur 26.1, un orifice de passage de vapeur délimitant en partie le passage d'écoulement en chicane 28.

Comme représenté sur la figure 11, le bord longitudinal supérieur 27.1 de la paroi de guidage inférieure 27 et le bord longitudinal inférieur 26.1 de la paroi de guidage supérieure 26 s'étendent sensiblement dans un même plan qui est sensiblement horizontal lorsque le couvercle 4 est dans la position de fermeture. Une telle configuration de l'orifice de passage de vapeur permet de détourner le flux de vapeur vers le haut afin de séparer gravitairement les condensats présents dans le flux de vapeur ; et ainsi d'augmenter significativement l'efficacité de séparation entre la vapeur et les condensats à l'intérieur du circuit d'évacuation de vapeur 18.

En outre, le dispositif de guidage de flux 23 comporte des parois de renfort 29 qui s'étendent chacune selon un plan sensiblement vertical et qui sont configurées pour assurer la tenue mécanique du dispositif de guidage de flux 23. De façon avantageuse, chaque paroi de renfort 29 relie mécaniquement la paroi de guidage inférieure 27 à la paroi de guidage supérieure 26.

Avantageusement, le dispositif de guidage de flux 23 comporte des orifices d'écoulement 31 configurés pour autoriser un écoulement des condensats à l'extérieur du dispositif de guidage de flux 23. De façon avantageuse, la paroi de guidage inférieure 27 est configurée pour guider les condensats, collectés par la paroi de guidage inférieure 27, vers les orifices d'écoulement 31, lorsque le couvercle 4 occupe la position d'ouverture.

Plus particulièrement, les orifices d'écoulement 31 sont reliés fluidiquement à la chambre de collecte 14.1 du circuit d'acheminement de condensat 18, ce qui permet ainsi de diriger les condensats depuis le dispositif de guidage de flux 23 jusqu'au bac de collecte de condensat 12. De façon avantageuse, les orifices d'écoulement 31 sont prévus à l'aplomb de la chambre de collecte 14.1, indépendamment de la position occupée par le couvercle 4.

Comme représenté sur les figures 9 à 12, les orifices d'écoulement 31 comprennent au moins un orifice d'écoulement amont 31.1 prévu dans une paroi inférieure du dispositif de guidage de flux 23 et situé en amont de la paroi de guidage inférieure 27. Le ou chaque orifice d'écoulement amont 31.1 est par exemple adjacent à une portion inférieure de la paroi de guidage inférieure 27, de sorte à faciliter l'écoulement des condensats depuis la paroi de guidage supérieure 26 et la paroi de guidage inférieure 27 jusqu'à l'extérieur du circuit d'évacuation de vapeur 18.

De façon avantageuse, les orifices d'écoulement 31 comprennent au moins un orifice d'écoulement aval 31.2 prévu dans la paroi inférieure du dispositif de guidage de flux 23 et situé en aval de la paroi de guidage inférieure 27. Le ou chaque orifice d'écoulement aval 31.2 est configuré pour autoriser un écoulement des condensats présents entre la paroi de guidage inférieure 27 et la surface interne du couvercle 4, et provenant des orifices d'évacuation de vapeur 19 en direction de la chambre de collecte 14.1.

Bien entendu, la présente invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

## Revendications

1. Appareil de cuisson électrique (1) à bain de cuisson configuré pour la cuisson d'aliment et comportant :
- un boîtier (2) comportant une cuve de cuisson (3) configurée pour recevoir un bain de cuisson ;
- un couvercle (4) mobile autour d'un axe de pivotement (A1) entre une position d'ouverture dans laquelle le couvercle (4) autorise un accès à la cuve de cuisson (3), et une position de fermeture dans laquelle le couvercle (4) empêche l'accès à la cuve de cuisson (3) et délimite, avec la cuve de cuisson (3), une chambre de cuisson ;
- un dispositif de chauffage (50) configuré pour chauffer le bain de cuisson ; et
- un circuit d'évacuation de vapeur (18) comprenant au moins un orifice d'évacuation de vapeur (19) prévu sur le couvercle (4), le circuit d'évacuation de vapeur (18) étant configuré pour acheminer un flux de vapeur provenant de la chambre de cuisson jusqu'à l'au moins un orifice d'évacuation de vapeur (19) lorsque le couvercle (4) est dans la position de fermeture,
dans lequel le circuit d'évacuation de vapeur (18) comporte un dispositif de guidage de flux (23) disposé dans le couvercle (4) et comprenant une paroi de guidage supérieure (26) et une paroi de guidage inférieure (27) délimitant entre elles un passage d'écoulement en chicane (28) relié fluidiquement à l'au moins un orifice d'évacuation de vapeur (19), la paroi de guidage inférieure (27) étant configurée pour s'étendre au moins en partie à l'aplomb et en dessous d'un bord longitudinal inférieur (26.1) de la paroi de guidage supérieure (26) lorsque le couvercle (4) est dans la position d'ouverture, de telle sorte que des condensats présents sur la paroi de guidage supérieure (26) sont aptes à s'écouler, par gravité et depuis la paroi de guidage supérieure (26), sur la paroi de guidage inférieure (27) lorsque le couvercle (4) est dans la position d'ouverture.

2. Appareil de cuisson électrique (1) selon la revendication 1, dans lequel la paroi de guidage supérieure (26) est configurée pour s'étendre vers le bas lorsque le couvercle (4) occupe la position de fermeture et que le boîtier (2) repose sur une surface horizontale, et la paroi de guidage inférieure (27) est configurée pour s'étendre vers le haut lorsque le couvercle (4) occupe la position de fermeture et que le boîtier (2) repose sur une surface horizontale.

3. Appareil de cuisson électrique (1) selon la revendication 1 ou 2, dans lequel le couvercle (4) comporte une chambre interne (22) dans laquelle est disposé le dispositif de guidage de flux (23).

4. Appareil de cuisson électrique (1) selon l'une quelconque des revendications 1 à 3, dans lequel la paroi de guidage supérieure (26) et la paroi de guidage inférieure (27) sont décalées latéralement l'une par rapport à l'autre lorsque le couvercle (4) occupe la position de fermeture.

5. Appareil de cuisson électrique (1) selon l'une quelconque des revendications 1 à 4, dans lequel la paroi de guidage inférieure (27) comporte un bord longitudinal supérieur (27.1) configuré pour délimiter au moins en partie, avec le bord longitudinal inférieur (26.1) de la paroi de guidage supérieure (26), un orifice de passage de vapeur délimitant en partie le passage d'écoulement en chicane (28).

6. Appareil de cuisson électrique (1) selon la revendication 5, dans lequel le bord longitudinal supérieur (27.1) de la paroi de guidage inférieure (27) et le bord longitudinal inférieur (26.1) de la paroi de guidage supérieure (26) s'étendent sensiblement dans un même plan qui est sensiblement horizontal lorsque le couvercle (4) est dans la position de fermeture.

7. Appareil de cuisson électrique (1) selon l'une quelconque des revendications 1 à 6, dans lequel le dispositif de guidage de flux (23) comporte au moins une paroi de renfort (29) qui s'étend selon un plan sensiblement vertical et qui est configurée pour assurer la tenue mécanique du dispositif de guidage de flux (23).

8. Appareil de cuisson électrique (1) selon l'une quelconque des revendications 1 à 7, dans lequel le dispositif de guidage de flux (23) comporte au moins un orifice d'écoulement (31) configuré pour autoriser un écoulement des condensats à l'extérieur dudit dispositif de guidage de flux (23).

9. Appareil de cuisson électrique (1) selon la revendication 8, lequel comporte :
- un bac de collecte de condensat (12), et
- un circuit d'acheminement de condensat (13) relié fluidiquement à l'au moins un orifice d'écoulement (31) et configuré pour acheminer les condensats provenant du circuit d'évacuation de vapeur (18) jusqu'au bac de collecte de condensat (12).

10. Appareil de cuisson électrique (1) selon la revendication 9, lequel comporte un dispositif de collecte (6) comprenant au moins un orifice d'évacuation de condensat (6.3), le dispositif de collecte (6) étant configuré pour s'étendre au moins en partie à l'intérieur de la chambre de cuisson et pour collecter, lorsque le couvercle (4) est dans la position de fermeture, des condensats provenant de la cuisson des aliments, le circuit d'acheminement de condensat (13) étant configuré pour acheminer des condensats provenant de l'au moins un orifice d'évacuation de condensat (6.3) jusqu'au bac de collecte de condensat (12).

11. Appareil de cuisson électrique (1) selon la revendication 9 ou 10, dans lequel le circuit d'acheminement de condensat (13) comporte une chambre de collecte (14.1) prévue dans le couvercle (4) et configurée pour collecter les condensats s'écoulant depuis l'au moins un orifice d'écoulement (31).

12. Appareil de cuisson électrique (1) selon l'une quelconque des revendications 1 à 11, dans lequel le couvercle (4) comporte au moins une nervure périphérique (19.3) qui s'étend depuis une surface interne du couvercle (4) et sur le pourtour de l'au moins un orifice d'évacuation de vapeur (19).

13. Appareil de cuisson électrique (1) selon la revendication 12, dans lequel le couvercle (4) comporte une pluralité de nervures périphériques (19.3) s'étendant chacune sur le pourtour d'un orifice d'évacuation de vapeur (19) respectif et configurées pour délimiter des canaux d'écoulement de condensat entre les orifices d'évacuation de vapeur (19).
